# EUROPEAN PATENT SPECIFICATION

(11) **EP 0 751 974 B1**
(45) Date of publication and mention of the grant of the patent: **27.10.1999**
(21) Application number: 95913083.2
(22) Date of filing: 10.03.1995
(51) Int. Cl.: C08L 23/06, C08K 13/02

(54) **PROCESS FOR THE STABILIZATION OF HDPE**
PROZESS FÜR DIE STABILISATION VON HDPE
PROCEDE DE STABILISATION DU POLYETHYLENE HAUTE DENSITE

(30) Priority: 22.03.1994 CH 86494
(43) Date of publication of application: 08.01.1997
(73) Proprietor: Ciba Specialty Chemicals Holding Inc., 4057 Basel (CH)
(72) Inventor: HOFFMANN, Kurt, D-64686 Lautertal 1 (DE); HERBST, Heinz, D-64686 Lautertal-Reichenbach (DE); PFAENDNER, Rudolf, D-64668 Rimbach/Odenwald 1 (DE)
(86) International application number: EP9500897
(87) International publication number: WO9525767

(56) References cited:
- WO-A-94/07950
- WO-A-94/07951
- US-A- 4 443 572
- DATABASE WPI Week 7428 Derwent Publications Ltd., London, GB; AN 74-51221V & JP-A-49 023 583 (MITSUBISHI) , 17 June 1974

## Description

The invention relates to stabilized high-density polyethylene (HDPE), as obtainable by means of catalysts of the Ziegler-Natta type, to a stabilization process, and to the use of a stabilizer mixture in this process.

The processing and use of bulk plastics (for example polypropylene, polyethylene or PVC) are impossible without the addition of stabilizers such as antioxidants and light stabilizers, etc. In recent years, advantageous processing and long-term stabilizers for fresh materials (for example polypropylene or polyethylene) have proven to be combinations of sterically hindered phenols and organic phospites and phosphonites.

Some organic phosphites are very sensitive to moisture and tend towards hydrolysis, causing a drop in effectivness. EP-A-0 400 454 proposes stabilizing organic phosphites derived from a pentaerythrityl phosphite by addition of a metal soap, an alkali metal oxide or an alkali metal salt. In US 4 443 572, a pentaerythrityl phosphite is stabilized by addition of an alkaline earth metal oxide. Furthermore, FR-A-82 09635 describes copolymers of ethylene and another olefin to which a mixture of a phenolic antioxidant, an organic phosphite and an alkaline earth metal oxide have been added.

The object of the present invention was to provide a novel stabilizer system by means of which fresh HDPE material, which experiences a reduction in molecular weight during processing, having improved stability compared with that on addition of known stabilizers can be obtained.

The invention thus relates to stabilized high-density polyethylene (HDPE) which experiences a reduction in molecular weight during processing, as obtained by means of catalysts of the Ziegler-Natta type, comprising a mixture, preferably from 0.05 to 15 % by weight, of a) at least one sterically hindered phenol, b) at least one organic phosphite or phosphonite and c) calcium oxide, with the proviso that no thiosynergist is present and that the HDPE is no recyclate.

The novel stabilizer combination gives an unexpected, synergistic reduction in the drop in molecular weight during processing. Thus, during multiple extrusion (processing stability), the addition of the novel stabilizer combination results in an only very slight increase in the melt flow rate. Furthermore, the addition of the novel stabilizer combination gives very good long-term heat stability.

For the purposes of the present invention, HDPE is obtainable by polymerization by means of organometallic mixed catalysts (Ziegler-Natta catalysts), for example by precipitation polymerization. Combinations of metals from sub-groups IV to VIII with metals from main groups I to IV of the Periodic Table are usually used. The reaction is carried out under atmospheric pressure or a superatmospheric pressure of up to about 5 bar at temperatures below 150°C in an inert solvent, for example aromatics or alkane or cycloalkane hydrocarbons. In industry, catalyst combinations of trialkylaluminium compounds, alkylaluminium halides and, for example, magnesium chloride, triethylaluminium, aluminium trichloride, diethylaluminium chloride, tris(2-methylpropyl)aluminium, or diethylmagnesium and titanium(III) chloride, titanium(IV) chloride, titanic esters and, for example vanadium trichloride or tribromide, vanadium tetrachloride, zirconium tetrachloride or tetrabromide, VOCl₂, VOCl₃, vanadium trisacetylacetonate, dichlorotitanocene, dichlorozirconocene, a titanium(III) chloride/methyltitanium trichloride mixture or magnesium chloride-modified titanium(IV) chloride catalysts have proven particularly successful. It is also possible to prepare HDPE by gas-phase polymerization. In this case, the catalyst is a transition-metal compound (for example titanium(IV) chloride) applied to high-purity, anhydrous magnesium compounds. The polymerization is carried out at a pressure of about 3.5 MPa and a temperature of 85-100°C.

The a:b weight ratio is preferably from 20:1 to 1:20, in particular from 10:1 to 1:10, very particularly preferably from 4:1 to 1:4. The (a+b):c weight ratio is preferably from 10:1 to 1:20, in particular from 5:1 to 1:10, very particularly preferably from 3:1 to 1:3.

The HDPE is preferably mixed with from 0.05 to 5 % by weight, particualrly preferably from 0.1 to 2 % by weight, very particularly preferably from 0.1 to 1 % by weight, of the mixture of a, b and c.

The sterically hindered phenols used as component a are known stabilizers against thermooxidative ageing of plastics, in particular polyolefins. The sterically hindered phenols contain, for example, at least one group of the formula I 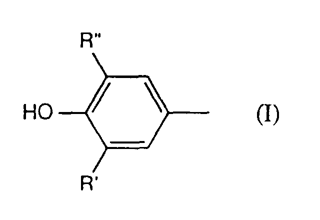 in which R' is hydrogen, methyl or tert-butyl, and
R" is unsubstituted or substituted alkyl or unsubstituted or substituted alkylthioalkyl.

Particularly preferred compounds as component a are those of the formula II 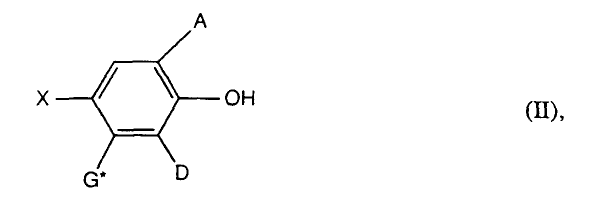 in which
- A: is hydrogen, C₁-C₂₄alkyl, C₅-C₁₂cycloalkyl, phenyl-C₁-C₄alkyl, phenyl, -CH₂-S-R₂₅ or 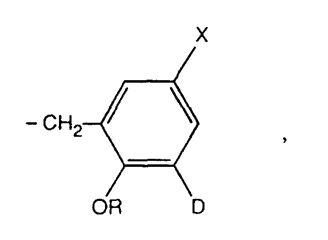
- D: is C₁-C₂₄alkyl, C₅-C₁₂cycloalkyl, phenyl-C₁-C₄-alkyl, phenyl or -CH₂-S-R₂₅,
- X: is hydrogen, C₁-C₁₈alkyl, -CₐH₂ₐ-S_{q}-R₂₆, -C_{b}H_{2b}-CO-OR₂₇, -C_{b}H_{2b}-CO-N(R₂₉)(R₃₀), -CH₂N(R₃₄)(R₃₅), 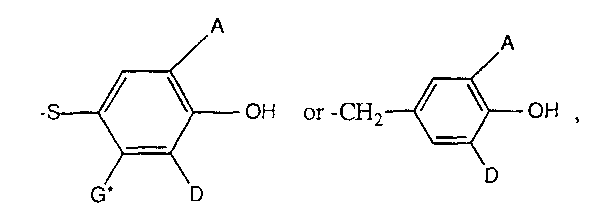
- R: is hydrogen or a group of the formula -CO-CH=CH₂,
- G*: is hydrogen or C₁-C₁₂alkyl,
- R₂₅: is C₁-C₁₈alkyl, phenyl, -(CH₂)_{c}-CO-OR₂₈ or -CH₂CH₂OR₃₃,
- R₂₆: is hydrogen, C₁-C₁₈alkyl, phenyl, benzyl, 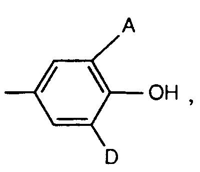 -(CH₂)_{c}-CO-OR₂₈ or -CH₂-CH₂-OR₃₃,
- R₂₇: is C₁-C₃₀alkyl, -CHR₃₁-CH₂-S-R₃₂, 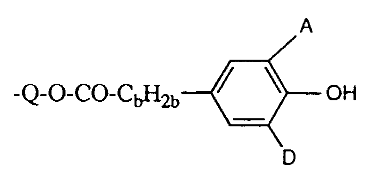 or 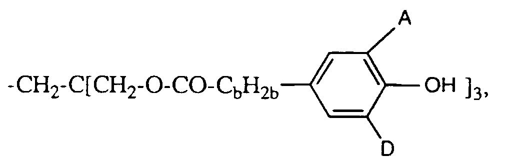 in which Q is C₁-C₈alkylene, C₄-C₆thiaalkylene or -CH₂CH₂(OCH₂CH₂)_{d}-,
- R₂₈: is C₁-C₂₄alkyl,
- R₂₉: is hydrogen, C₁-C₁₈alkyl or cyclohexyl,
- R₃₀: is C₁-C₁₈alkyl, cyclohexyl, phenyl, C₁-C₁₈alkyl-substituted phenyl or one of the groups 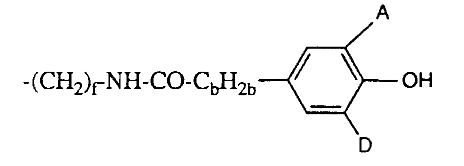 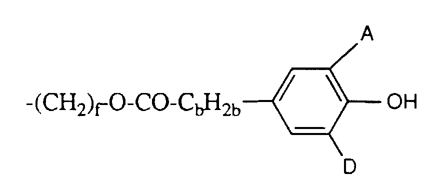 and 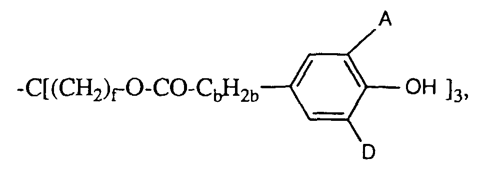 or R₂₉ and R₃₀ together are C₄-C₈alkylene, which may be interrupted by -O- or -NH-,
- R₃₁: is hydrogen, C₁-C₄alkyl or phenyl,
- R₃₂: is C₁-C₁₈alkyl,
- R₃₃: is hydrogen, C₁-C₂₄alkyl, phenyl, C₂-C₁₈alkanoyl or benzoyl,
- R₃₄: C₁-C₁₈alkyl, cyclohexyl, phenyl, C₁-C₁₈alkyl-substituted phenyl or 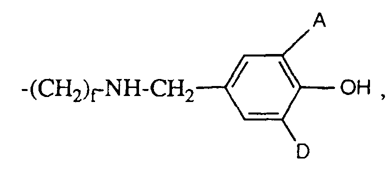
- R₃₅: is hydrogen, C₁-C₁₈alkyl, cyclohexyl, or 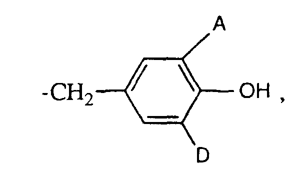 or
- R₃₄ and R₃₅: together are C₄-C₈alkylene, which may be interrupted by -O- or -NH-, a is 0, 1, 2 or 3, b is 0, 1, 2 or 3, c is 1 or 2, d is 1 to 5, f is 2 to 8 and q is 1, 2, 3 or 4.

Preference is given to compounds of the formula II in which
- A: is hydrogen, C₁-C₈alkyl, cyclohexyl, phenyl, -CH₂-S-C₁-C₁₈alkyl or 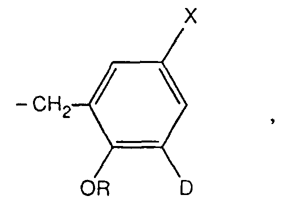
- D: is C₁-C₈alkyl, cyclohexyl, phenyl or -CH₂-S-C₁-C₁₈alkyl,
- X: is hydrogen, C₁-C₈alkyl, -CₐH₂ₐ-S_{q}-R₂₆, -C_{b}H_{2b}-CO-OR₂₇, -CH₂N(R₃₄)(R₃₅), 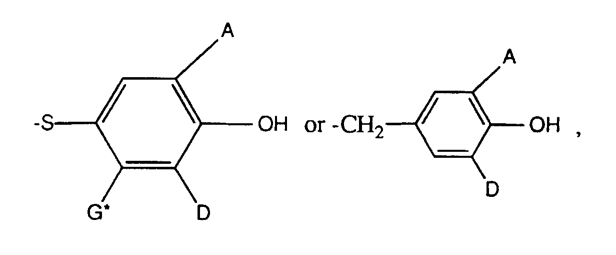
- R₂₆: is C₁-C₁₂alkyl, phenyl or -(CH₂)_{c}-CO-OR₂₈,
- R₂₇: is C₁-C₁₈alkyl, 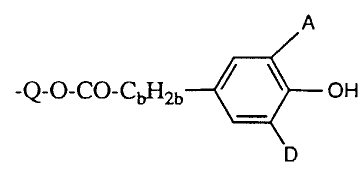 or 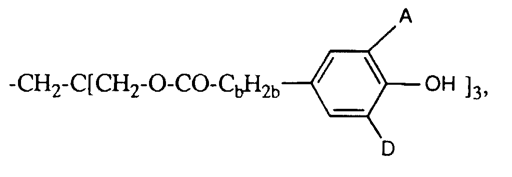 in which Q is C₁-C₈alkylene, -CH₂-CH₂-S-CH₂CH₂- or -CH₂CH₂(OCH₂CH₂)_{d}-,
- R₂₈: is C₁-C₁₈alkyl,
- R₃₄ and R₃₅,: independently of one another, are hydrogen or C₁-C₁₂alkyl, or
- R₃₄ and R₃₅: together are C₄-C₈alkylene, which may be interrupted by -O- or -NH-, a is 1 or 2, b is 1 or 2, c is 1 or 2, and d is 1, 2 or 3.

Examples of sterically hindered phenols of this type are:
2,6-di-tert-butyl-4-methylphenol, 2-tert-butyl-4,6-dimethylphenol, 2,6-di-tert-butyl-4-ethylphenol, 2,6-di-tert-butyl-4-n-butylphenol, 2,6-di-tert-butyl-4-i-butylphenol, 2,6-dicyclopentyl-4-methylphenol, 2-(α-methylcyclohexyl)-4,6-dimethylphenol, 2,6-dioctadecyl-4-methylphenol, 2,4,6-tricyclohexylphenol, 2,6-di-tert-butyl-4-methoxymethylphenol, 2,6-dinonyl-4-methylphenol, 2,6-di-tert-butyl-4-methoxyphenol, 2,5-di-tert-butylhydroquinone, 2,5-di-tert-amylhydroquinone, 2,6-diphenyl-4-octadecyloxyphenol, 2,2'-thiobis(6-tert-butyl-4-methylphenol), 2,2'-thiobis(4-octylphenol), 4,4'-thiobis(6-tert-butyl-3-methylphenol), 4,4'-thiobis(6-tert-butyl-2-methylphenol), 2,2'-methylenebis(6-tert-butyl-4-methylphenol), 2,2'-methylenebis(6-tert-butyl-4-ethylphenol), 2,2'-methylenebis[4-methyl-6-(a-methylcyclohexyl)phenol], 2,2'-methylenebis(4-methyl-6-cyclohexylphenol), 2,2'-methylenebis(6-nonyl-4-methylphenol), 2,2'-methylenebis(4,6-di-tert-butylphenol), 2,2'-ethylenebis(4,6-di-tert-butylphenol), 2,2'-ethylidenebis(6-tert-butyl-4-isobutylphenol), 2,2'-methylenebis[6-(a-methylbenzyl)-4-nonylphenol], 2,2'-methylenebis[6-(a,a-dimethylbenzyl)-4-nonylphenol], 4,4'-methylenebis(2,6-di-tert-butylphenol), 4,4'-methylenebis(6-tert-butyl-2-methylphenol), 1,1-bis(5-tert-butyl4-hydroxy-2-methylphenyl)butane, 2,6-bis(3-tert-butyl-5-methyl-2-hydroxybenzyl)-4-methylphenol, 1,1,3-tris(5-tert-butyl-4-hydroxy-2-methylphenyl)butane, 1,1-bis(5-tert-butyl-4-hydroxy-2-methylphenyl)-3-n-dodecylmercaptobutane, ethylene glycol bis[3,3-bis(3'-tert-butyl-4'-hydroxyphenyl)butyrate], bis(3-tert-butyl-4-hydroxy-5-methylphenyl)dicyclopentadiene, bis[2-(3'-tert-butyl-2'-hydroxy-5'-methylbenzyl)-6-tert-butyl-4-methylphenyl] terephthalate, 1,3,5-tris(3,5-di-tert-butyl-4-hydroxybenzyl)-2,4,6-trimethylbenzene, bis(3,5-di-tert-butyl-4-hydroxybenzyl) sulfide, isooctyl 3,5-di-tert-butyl-4-hydroxybenzylmercaptoacetate, bis(4-tert-butyl-3-hydroxy-2,6-dimethylbenzyl) dithioterephthalate, 1,3,5-tris(3,5-di-tert-butyl-4-hydroxybenzyl) isocyanurate, 1,3,5-tris(4-tert-butyl-3-hydroxy-2,6-dimethylbenzyl) isocyanurate, dioctadecyl 3,5-di-tert-butyl-4-hydroxybenzylphosphonate and the calcium salt of monoethyl 3,5-di-tert-butyl-4-hydroxybenzylphosphonate.

Component a is particularly preferably a compound containing at least one group of the formula 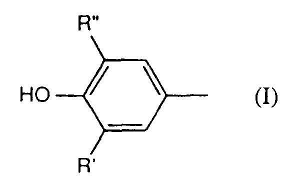 in which R' is methyl or tert-butyl; and
R" is unsubstituted or substituted alkyl or unsubstituted or substituted alkylthioalkyl.

Examples of such hindered phenols are the esters of β-(3,5-di-tert-butyl-4-hydroxyphenyl)propionic acid and of β-(5-tert-butyl-4-hydroxy-3-methylphenyl)propionic acid with monohydric or polyhydric alcohols, for example with methanol, octanol, octadecanol, 1,6-hexanediol, neopentyl glycol, thiodiethylene glycol, diethylene glycol, triethylene glycol, pentaerythritol, tris(hydroxyethyl) isocyanurate, N,N'-bis(hydroxyethyl)oxalamide, and the amides of these acids, for example N,N'-bis(3,5-di-tert-butyl-4-hydroxyphenylpropionyl)hexamethylenediamine, N,N'-bis(3,5-di-tert-butyl-4-hydroxyphenylpropionyl)trimethylenediamine and N,N'-bis(3,5-di-tert-butyl-4-hydroxyphenylpropionyl)hydrazine.

Other particularly preferred compounds are: 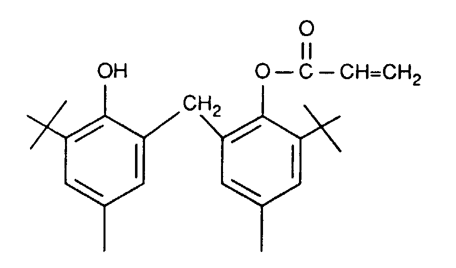 {2-(1,1-dimethylethyl)-6-[[3-(1,1-dimethylethyl)-2-hydroxy-5-methylphenyl]methyl]-4-methylphenyl 2-propenoate}; 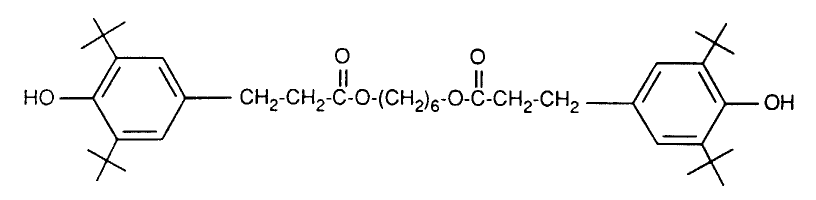 {1,6-hexanediyl 3,5-bis(1,1-dimethylethyl)-4-hydroxyphenylpropanoate}; 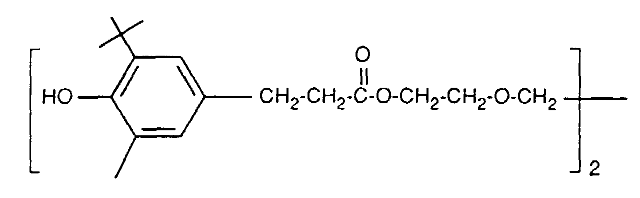 {1,2-ethanediylbis(oxy-2,1-ethanediyl)3-(1,1-dimethylethyl)-4-hydroxy-5-methyl-phenylpropanoate}; 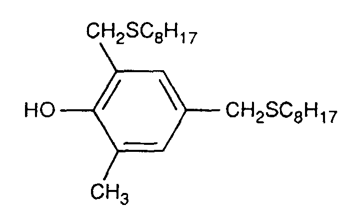 {2-methyl-4,6-bis[(octylthio)methyl]phenol}; 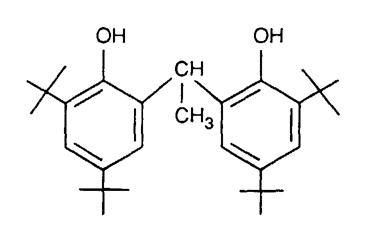 {2,2'-ethylidenebis(4,6-di-tert-butylphenol)}; 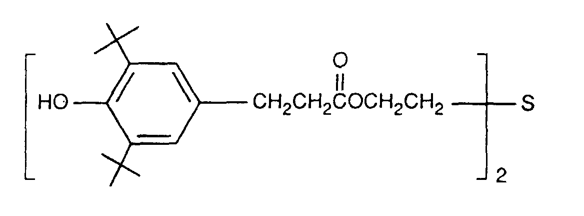 {thiodi-2,1-ethanediyl bis-3,5-di(1,1-dimethylethyl)-4-hydroxyphenylpropanoate}; 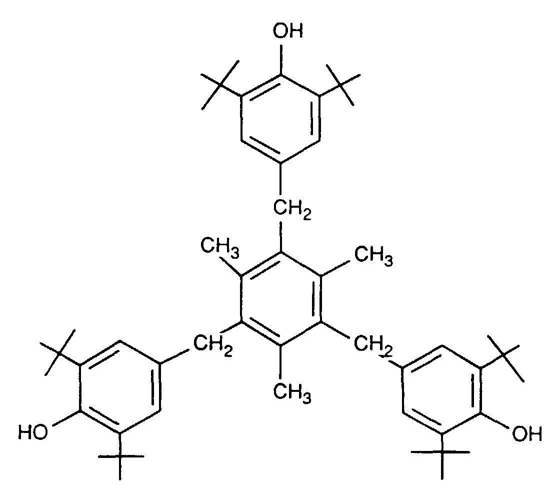 {4,4',4"-[(2,4,6-trimethyl-1,3,5-phenyltriyl)tris(methylene)]tris[2,6-bis(1,1-dimethylethyl) phenol}.

Component a is very particularly preferably pentaerythrityl, octyl or octadecyl β-(3,5-di-tert-butyl-4-hydroxyphenyl)propionate.

Component a is preferably used in an amount from 0.01 to 3 % by weight, based on HDPE.

The organic phosphites and phosphonites to be used according to the invention as component b are likewise known as stabilizers for plastics. They are used, in particular, as processing stabilizers for polyolefins.

The phosphites to be used according to the invention conform, for example, to the formulae 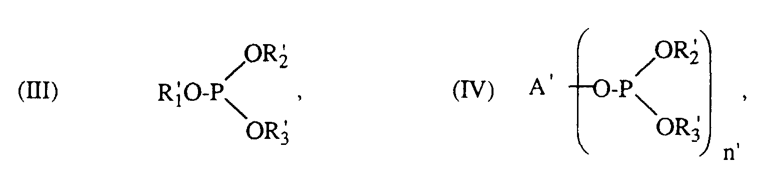 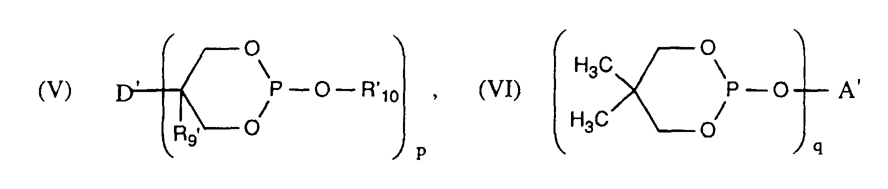 or 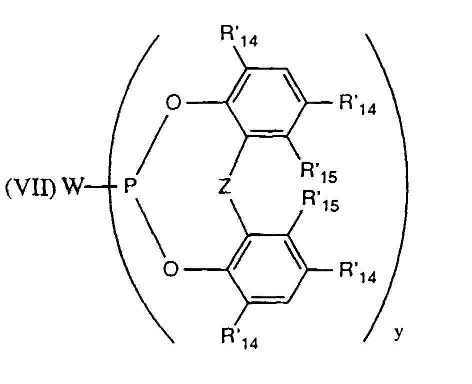 in which
R'₁, R'₂ and R'₃, independently of one another, are alkyl having 1 to 18 carbon atoms, alkyl having 1 to 18 carbon atoms which is substituted by halogen, -COOR₄', -CN or -CONR₄'R₄', alkyl having 2 to 18 carbon atoms which is interrupted by -S-, -O- or -NR'₄-, cycloalkyl having 5 to 8 carbon atoms, phenyl or naphthyl, phenyl or naphthyl which is substituted by halogen, 1 to 3 alkyl radicals or alkoxy radicals having a total of 1 to 18 carbon atoms, 2,2,6,6-tetramethylpiperid-4-yl, N-allyl- or N-benzyl- or N-alkyl-2,2,6,6-tetramethylpiperid-4-yl having 1 to 4 carbon atoms in the alkyl moiety or N-alkanoyl-2,2,6,6-tetramethylpiperid-4-yl having 1 to 4 carbon atoms in the alkyl moiety, or N-alkylene-2,2,6,6-tetramethylpiperidyl or N-alkylene-4-alkoxy-2,2,6,6-tetramethylpiperidyl having 1 to 3 carbon atoms in the alkylene moiety and 1 to 18 carbon atoms in the alkoxy moiety,
R'₄ or the radicals R₄' are, independently of one another, hydrogen, alkyl having 1 to 18 carbon atoms, cycloalkyl having 5 to 12 carbon atoms or phenylalkyl having 1 to 4 carbon atoms in the alkyl moiety,
n' is 2, 3 or 4,
A', if n' or q is 2, is alkylene having 2 to 12 carbon atoms, alkylene having 2 to 12 carbon atoms which is interrupted by -S-, -O- or -NR'₄-, in which R'₄ is as defined above, or a radical of the formula 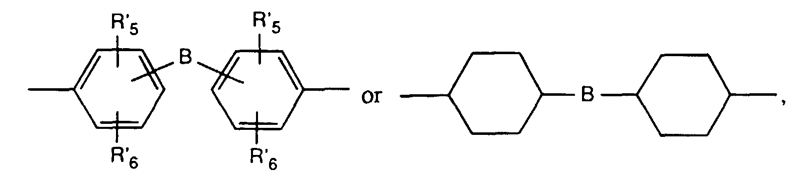
A', if n' or q is 3, is a radical of the formula -CᵣH₂ᵣ₋₁- or N(CH₂CH₂ 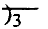 , in which r is 5 or 6,
A', if n' is 4, is the radical of the formula C(CH 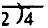 ,
R'₅ and R'₆ independently of one another, are hydrogen or alkyl having 1 to 8 carbon atoms,
B is a radical of the formula -CH₂-, -CHR'₄-, -CR'₁R'₄-, -S- or a direct bond, in which R'₁ and R'₄ are as defined above,
p is 1 or 2,
D' is methyl if p is 1 and -CH₂OCH₂- if p is 2,
R'₉ is methyl, and R'₁₀ is as defined for R'₁,
q is 2 or 3,
y is 1, 2 or 3,
W, if y is 1, is alkyl having 1 to 18 carbon atoms, a radical of the formula -OR'₁₆, -NR'₁₇R'₁₈ or fluorine,
W, if y is 2, is a radical of the fomrula -O-A"-O- or 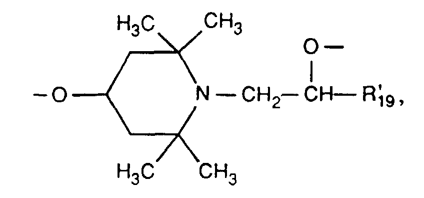
W, if y is 3, is a radical of the formula R^{'}₄C(CH₂O 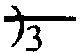 , N(C₂H₄O 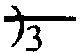 or N(C₃H₆O 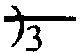 , in which R'₄ is as defined above,
R'₁₆ is as defined for R'₁,
R'₁₇ and R'₁₈, independently of one another, are alkyl having 1 to 18 carbon atoms, benzyl, cyclohexyl, a 2,2,6,6-tetra- or 1,2,2,6,6-pentamethylpiperid-4-yl radical, or R'₁₇ and R'₁₈ together form butylene, pentylene, hexylene or the radical of the formula -CH₂CH₂-O-CH₂CH₂-,
A" is as defined for A' if n' is 2,
R'₁₉ is hydrogen or methyl,
the substituents R'₁₄, independently of one another, are hydrogen, alkyl having 1 to 9 carbon atoms or cyclohexyl,
R'₁₅ is hydrogen or methyl and
Z is a direct bond, -CH₂-, -C(R'₁₄)₂- or -S-, in which the substituents R'₁₄ are identical or different and are as defined above.

Particularly suitable phosphites of the formula (III) are those in which R'₁, R'₂ and R'₃, independently of one another, are alkyl having 1 to 18 carbon atoms, phenyl, phenyl which is substituted by 1 to 3 alkyl radicals having a total of 1 to 18 carbon atoms, or 2,2,6,6-tetramethylpiperid-4-yl, in particular, independently of one another, phenyl which is substituted by 1 to 3 alkyl radicals having a total of 1 to 12 carbon atoms.

Particularly suitable phosphites of the formula (IV) are those in which A' is preferably, if n' is 2, alkylene having 2 to 12 carbon atoms, -CH₂CH₂-O-CH₂CH₂-, -CH₂CH₂-O-CH₂CH₂O-CH₂CH₂- or -CH₂CH₂-NR'₄-CH₂CH₂-, or A', if n' is 3, is N(CH₂CH 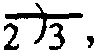 where R'₄ is alkyl having 1 to 4 carbon atoms.

Particularly suitable phosphites of the formula (V) are those in which p is 1, D' is methyl, R'₉ is methyl and R'₁₀ is phenyl which is substituted by 1 to 3 alkyl radicals having a total of 1 to 18 carbon atoms.

Particularly suitable phosphites of the formula (VII) are those in which W, if y is 1, is a radical of the formula -OR'₁₆, -NR'₁₇R'₁₈ or fluorine, or W, if y is 2, is a radical of the formula -O-CH₂CH₂-NR'₄-CH₂CH₂-O-, or W, if y is 3, is a radical of the formula N(CH₂CH₂O 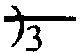 , where R'₁₆ is alkyl having 1 to 18 carbon atoms, R'₁₇ and R'₁₈, independently of one another, are alkyl having 1 to 18 carbon atoms, cyclohexyl or benzyl, or R'₁₇ and R'₁₈ together form a piperidyl, morpholinyl or hexamethyleneimino radical, and R'₄ is as defined above, Z is a direct bond, -CH₂- or -CHCH₃-, and the two substituents R'₁₄, independently of one another, are alkyl having 1 to 4 carbon atoms, and, in particular, if y is 1, W is 2-ethylhexoxy or fluorine, R'₁₄ is tert-butyl, R'₁₅ is hydrogen and Z is -CH₂- or -CH(CH₃)-, or W, if y is 2, is a radical of the formula -O-CH₂CH₂-NCH₃-CH₂CH₂-O-.

Preference is given to phosphites and phosphonites which have relatively low hydrolytic sensitivity, for example trilauryl phosphite, trioctadecyl phosphite, distearyl pentaerythrityl diphosphite or tristearyl sorbityl triphosphite.

Preference is furthermore given to aromatic phosphites and phosphonites; these contain an aromatic hydrocarbon radical, for example a phenyl radical. Examples thereof are triphenyl phosphite, diphenyl alkyl phosphites, phenyl dialkyl phosphites and, in particular, tris(nonylphenyl) phosphite, tris(2,4-di-tert-butylphenyl) phosphite, bis(2,4-di-tert-butylphenyl) pentaerythrityl diphosphite, tetrakis(2,4-di-tert-butylphenyl)-4,4'-biphenylene diphosphonite and 2,2'-ethylidenebis(4,6-di-tert-butylphenyl) fluorophosphite.

Of particular interest are phosphites and phosphonites containing, as structural units, the P-O-Ar group, where Ar is an aromatic radical, preferably a phenyl radical, which contains an alkyl substituent in the ortho-position to the P-O-C bond. Suitable alkyl substituents are C₁-C₁₈alkyl radicals or C₅-C₇cycloalkyl radicals, preferably C₁-C₄alkyl radicals, in particular tert-butyl (indicated by 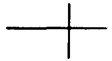 in the formulae).

The following phosphites and phosphonites are particularly preferred:
tris(2,4-di-ten-butylphenyl) phosphite; 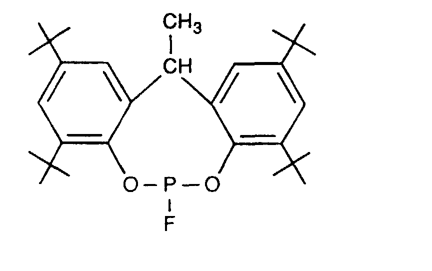 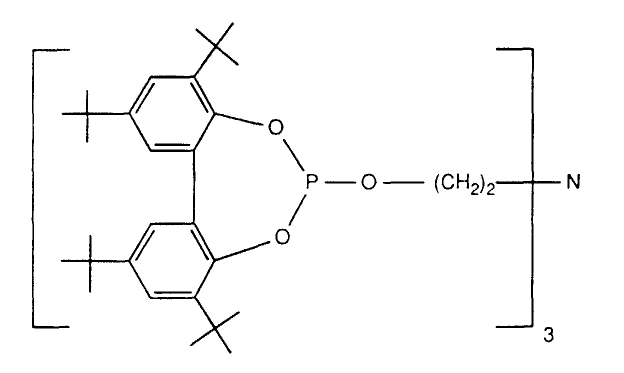 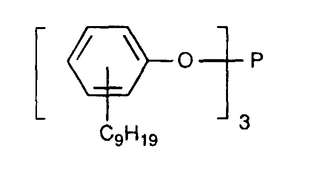 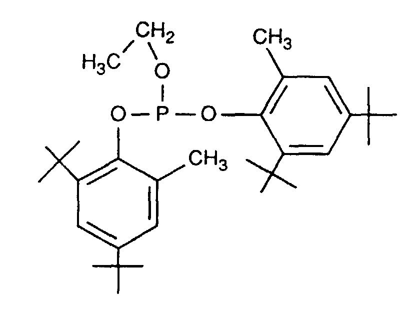 and

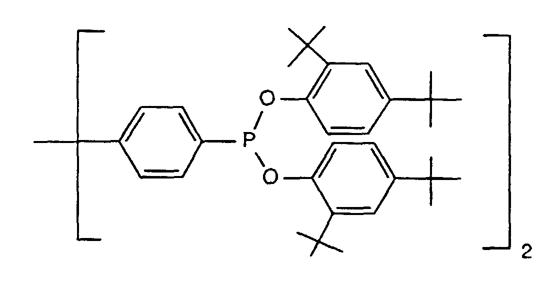

Component b is very particularly preferably tris(2,4-di-tert-butylphenyl) phosphite or

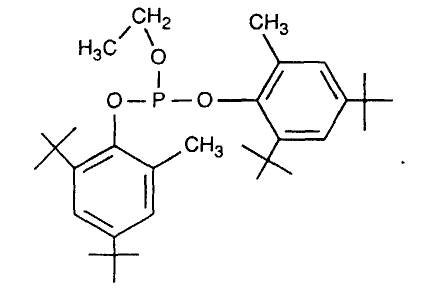

Component b is preferably used in an amount of from 0.01 to 3 % by weight, based on HDPE.

Component c is calcium oxide, which is also taken to include substances which only comprise some calcium oxide, for example MgO/CaO mixtures formed, for example, by ignition of dolomite, and Ca(OH)₂/CaO mixtures. The calcium oxide can be employed in the form of powder, but also in coated form or on a support material or alternatively mixed with an inert powder, for example polyethylene wax.

Component c is preferably used in an amount of from 0.005 to 10 % by weight, based on HDPE.

If desired, a mixture of various compounds for a and b can also be employed.

The present invention furthermore relates to the use of a mixture for stabilizing HDPE which experiences a reduction in molecular weight during processing and is obtained by means of catalysts of the Ziegler-Natta type, which mixture comprises a) at least one sterically hindered phenol, b) at least one organic phosphite or phosphonite and c) calcium oxide, with the proviso that no thiosynergist is present and that the HDPE is no recyclate.

The present invention furthermore relates to a process for the stabilization of HDPE which experiences a reduction in molecular weight during processing and is obtained, in particular, by means of catalysts of the Ziegler-Natta type, which comprises adding a) at least one sterically hindered phenol, b) at least one organic phosphite or phosphonite and c) calcium oxide to the HDPE, with the proviso that no thiosynergist is present and that the HDPE is no recyclate.

Preferred stabilizer mixtures and preferred process embodiments correspond in their components and mixing ratios to the preferences described in greater detail for the HDPE stabilized in accordance with the invention.

The addition of these combinations to the HDPE enables thermoplastic processing with reduced degradation and extends the service life of the materials produced from the HDPE.

The incorporation of the mixture in accordance with the novel process can be accomplished by adding the individual components, but alternatively by premixing the components in powder form, granular form or compacted form. It is also possible to prepare a mixture with an inert support, for example a mixture in LDPE as a masterbatch. The incorporation is usually carried out before or during shaping; these and other useful modes of incorporation are known to the person skilled in the art.

It is also possible to add further suitable stabilizers from the lactate series, for example calcium lactate or calcium stearoyl-2-lactylate, or benzofurans, for example 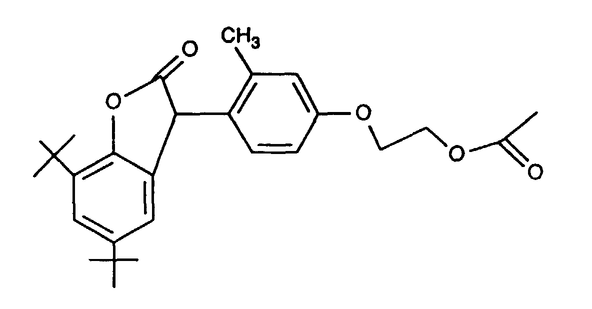 or described in US-A-4 325 863, US-A-4 338 244, US-A-5 175 312, US-A-5 216 052, US-A-5 252 643, DE-A-4 316 611, DE-A-4 316 622, DE-A-4 316 876, EP-A-0 589 839 or EP-A-0 591 102, and 3-[4-(2-acetoxyethoxy)phenyl]-5,7-di-tert-butyl-benzofuran-2-one, 5,7-di-tert-butyl-3-[4-(2-stearoyloxyethoxy)phenyl]benzofuran-2-one, 3,3'-bis[5,7-di-tert-butyl-3-(4-[2-hydroxyethoxy]phenyl)benzofuran-2-one], 5,7-di-tert-butyl-3-(4-ethoxyphenyl)benzofuran-2-one, 3-(4-acetoxy-3,5-dimethylphenyl)-5,7-di-tert-butylbenzofuran-2-one, 3-(3,5-dimethyl-4-pivaloyloxyphenyl)-5,7-di-tert-butylbenzofuran-2-one.

Other suitable stabilizers are chroman derivatives of the formula 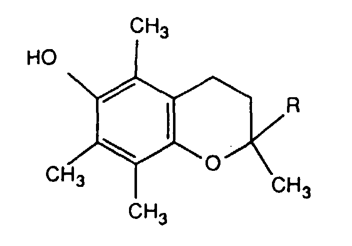 where R is -(CH₂)₃-CH(CH₃)-(CH₂)₃-CH(CH₃)-(CH₂)₃-CH-(CH₃)₂ or -CH₂-CH₂-O-C(O)-Z, and Z is C₁-C₁₈alkyl, -CH₂-CH₂-S-C₁-C₁₈alkyl or 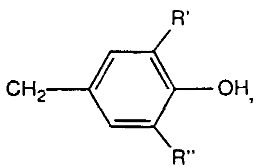 where R' and R" are hydrogen, methyl or tert-butyl, for example α-tocopherol, β-tocopherol, γ-tocopherol, δ-tocopherol and mixtures thereof (vitamin E).

If the HDPE article is also required to have high light stability, the addition of one or more light stabilizers is recommended. Suitable light stabilizers for this purpose are, in particular, those from the series consisting of benzophenones, benzotriazoles, oxanilides and sterically hindered amines. Examples of such compounds are:
2.1. 2-(2'-Hydroxyphenyl)benzotriazoles, for example 2-(2'-hydroxy-5'-methylphenyl)benzotriazole, 2-(3',5'-di-tert-butyl-2'-hydroxyphenyl)benzotriazole, 2-(5'-tert-butyl-2'-hydroxyphenyl)benzotriazole, 2-(2'-hydroxy-5'-(1,1,3,3-tetramethylbutyl)phenyl)benzotriazole, 2-(3',5'-di-tert-butyl-2'-hydroxyphenyl)-5-chlorobenzotriazole, 2-(3'-tert-butyl- 2'-hydroxy-5'-methylphenyl)-5-chlorobenzotriazole, 2-(3'-sec-butyl-5'-tert-butyl-2'-hydroxyphenyl)benzotriazole, 2-(2'-hydroxy-4'-octoxyphenyl)benzotriazole, 2-(3',5'-di-tert-amyl-2'-hydroxyphenyl)benzotriazole, 2-(3',5'-bis(α,α-dimethylbenzyl)-2'-hydroxyphenyl)benzotriazole, mixture of 2-(3'-tert-butyl-2'-hydroxy-5'-(2-octyloxycarbonylethyl)phenyl)-5-chlorobenzotriazole, 2-(3'-tert-butyl-5'-[2-(2-ethylhexyloxy)carbonylethyl]-2'-hydroxyphenyl)-5-chlorobenzotriazole, 2-(3'-tert-butyl-2'-hydroxy-5'-(2-methoxycarbonylethyl)phenyl)-5-chlorobenzotriazole, 2-(3'-tert-butyl-2'-hydroxy-5'-(2-methoxycarbonylethyl)phenyl)benzotriazole, 2-(3'-tert-butyl-2'-hydroxy-5'-(2-octyloxycarbonylethyl)phenyl)benzotriazole, 2-(3'-tert-butyl-5'-[2-(2-ethylhexyloxy)carbonylethyl]-2'-hydroxyphenyl)benzotriazole, 2-(3'-dodecyl-2'-hydroxy-5'-methylphenyl)benzotriazole, and 2-(3'-tert-butyl-2'-hydroxy-5'-(2-isooctyloxycarbonylethyl)phenylbenzotriazole, 2,2'-methylenebis[4-(1,1,3,3-tetramethylbutyl)-6-benzotriazol-2-yl phenol]; transesterification product of 2-[3'-tert-butyl-5'-(2-methoxycarbonylethyl)-2'-hydroxyphenyl] benzotriazole with polyethylene glycol 300; [R-CH₂CH₂-COO(CH₂) 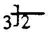 where R = 3'-tert-butyl-4'-hydroxy-5'-2H-benzotriazol-2-yl phenyl.
2.2. 2-Hydroxybenzophenones, for example the 4-hydroxy, 4-methoxy, 4-octoxy, 4-decyloxy, 4-dodecyloxy, 4-benzyloxy, 4,2',4'-trihydroxy and 2'-hydroxy-4,4'-dimethoxy derivatives.
2.3. Esters of unsubstituted or substituted benzoic acids, for example 4-tert-butyl-phenyl salicylate, phenyl salicylate, octylphenyl salicylate, dibenzoylresorcinol, bis(4-tert-butylbenzoyl)resorcinol, benzoylresorcinol, 2,4-di-tert-butylphenyl 3,5-di-tert-butyl-4-hydroxybenzoate, hexadecyl 3,5-di-tert-butyl-4-hydroxybenzoate, octadecyl 3,5-di-tert-butyl-4-hydroxybenzoate, 2-methyl-4,6-di-tert-butylphenyl 3,5-di-tert-butyl-4-hydroxybenzoate.
2.4. Acrylates, for example ethyl and isooctyl α-cyano-β,β-diphenylacrylate, methyl α-carbomethoxycinnamate, methyl and butyl α-cyano-β-methyl-p-methoxycinnamate, methyl α-carbomethoxy-p-methoxycinnamate and N-(β-carbomethoxy-β-cyanovinyl)-2-methylindoline.
2.5. Nickel compounds, for example nickel complexes of 2,2'-thiobis[4-(1,1,3,3-tetramethylbutyl)phenol], such as the 1:1 and 1:2 complexes, if desired with additional ligands, such as n-butylamine, triethanolamine or N-cyclohexyldiethanolamine, nickel dibutyldithiocarbamate, nickel salts of monoalkyl esters, such as the methyl or ethyl esters, of 4-hydroxy-3,5-di-tert-butylbenzylphosphonic acid, nickel complexes of ketoximes, such as of 2-hydroxy-4-methylphenyl undecyl ketoxime, and nickel complexes of 1-phenyl-4-lauroyl-5-hydroxypyrazole, if desired with additional ligands.
2.6 Sterically hindered amines, for example bis(2,2,6,6-tetramethylpiperidyl) sebacate, bis(2,2,6,6-tetramethylpiperidyl) succinate, bis(1,2,2,6,6-pentamethylpiperidyl) sebacate, bis(1,2,2,6,6-pentamethylpiperidyl)n-butyl-3,5-di-tert-butyl-4-hydroxybenzylmalonate, the product of the condensation of 1-hydroxyethyl-2,2,6,6-tetramethyl-4-hydroxypiperidine and succinic acid, the product of the condensation of N,N'-bis(2,2,6,6-tetramethyl-4-piperidyl)hexamethylenediamine and 4-tert-octylamino-2,6-dichloro-1,3,5-s-triazine, tris(2,2,6,6-tetramethyl-4-piperidyl) nitrilotriacetate, tetrakis(2,2,6,6-tetramethyl-4-piperidyl) 1,2,3,4-butanetetraoate, 1,1'-(1,2-ethanediyl)bis(3,3,5,5-tetramethylpiperazinone), 4-benzoyl-2,2,6,6-tetramethylpiperidine, 4-stearyloxy-2,2,6,6-tetramethylpiperidine, bis(1,2,2,6,6-pentamethylpiperidyl)-2-n-butyl-2-(2-hydroxy-3,5-di-tert-butylbenzyl)malonate, 3-n-octyl-7,7,9,9-tetramethyl-1,3,8-triazaspiro[4.5]decane-2,4-dione, bis(1-octyloxy-2,2,6,6-tetramethylpiperidyl) sebacate, bis(1-octyloxy-2,2,6,6-tetramethylpiperidyl) succinate, the product of the condensation of N,N'-bis(2,2,6,6-tetramethyl-4-piperidyl)hexamethylenediamine and 4-morpholino-2,6-dichloro-1,3,5-triazine, the product of the condensation of 2-chloro-4,6-di(4-n-butylamino-2,2,6,6-tetramethylpiperidyl)-1,3,5-triazine and 1,2-bis(3-aminopropylamino)ethane, the product of the condensation of 2-chloro-4,6-di(4-n-butylamino-1,2,2,6,6-pentamethylpiperidyl)-1,3,5-triazine and 1,2-bis(3-aminopropylamino)ethane, 8-acetyl-3-dodecyl-7,7,9,9-tetramethyl-1,3,8-triazaspiro[4.5]decane-2,4-dione, 3-dodecyl-1-(2,2,6,6-tetramethyl-4-piperidyl)pyrrolidine-2,5-dione and 3-dodecyl-1-(1,2,2,6,6-pentamethyl-4-piperidyl)pyrrolidine-2,5-dione.
2.7. Oxalamides, for example 4,4'-dioctyloxyoxanilide, 2,2'-dioctyloxy-5,5'-di-tert-butyloxanilide, 2,2'-didodecyloxy-5,5'-di-tert-butyloxanilide, 2-ethoxy-2'-ethyloxanilide, N,N'-bis(3-dimethylaminopropyl)oxalamide, 2-ethoxy-5-tert-butyl-2'-ethyloxanilide and mixtures thereof with 2-ethoxy-2'-ethyl-5,4'-di-tert-butyloxanilide, and mixtures of o- and p-methoxy- and of o- and p-ethoxy-disubstituted oxanilides.
2.8. 2-(2-Hydroxyphenyl)-1,3,5-triazines, for example 2,4,6-tris(2-hydroxy-4-octyloxyphenyl)-1,3,5-triazine, 2-(2-hydroxy-4-octyloxyphenyl)-4,6-bis(2,4-dimethylphenyl)-1,3,5-triazine, 2-(2,4-dihydroxyphenyl)-4,6-bis(2,4-dimethylphenyl)-1,3,5-triazine, 2,4-bis(2-hydroxy-4-propyloxyphenyl)-6-(2,4-dimethylphenyl)-1,3,5-triazine, 2-(2-hydroxy-4-octyloxyphenyl)-4,6-bis(4-methylphenyl)-1,3,5-triazine, 2- (2-hydroxy-4-dodecyloxyphenyl)-4,6-bis(2,4-dimethylphenyl)-1,3,5-triazine, 2- [2-hydroxy-4-(2-hydroxy-3-butoxypropoxy)phenyl]-4,6-bis(2,4-dimethylphenyl)-1,3,5-triazine, 2-[2-hydroxy-4-(2-hydroxy-3-octyloxypropoxy)phenyl]-4,6-bis(2,4-dimethylphenyl)-1,3,5-triazine.

Preference is given to light stabilizers from classes 2.1, 2.6 and 2.7, for example light stabilizers of the Chimassorb 944, Chimassorb 119, Tinuvin 234, Tinuvin 312, Tinuvin 622 and Tinuvin 770 type.

The light stabilizers are preferably added in an amount of from 0.01 to 2 % by weight, in particular from 0.05 to 0.5 % by weight, based on HDPE. The light stabilizers are preferably a combination of a benzotriazole and a sterically hindered amine.

If necessary other conventional plastics additives can be added to the HDPE, for example fillers, such as sawdust or mica, reinforcing agents, such as glass fibres, glass beads or mineral fibres, pigments, plasticizers, lubricants, such as metal stearates or laurates, flameproofing agents, antistatics or blowing agents. Such additions depend on the intended use of the HDPE.

The HDPE stabilized in this way can be used for a wide variety of purposes known to the person skilled in the art.

The HDPE can also be employed as a mixture with other plastics, for example in a coextrusion process, or in the form of a blend.

The examples below illustrate the novel process in greater detail. Here as in the remainder of the description, parts and percentages are by weight, unless stated otherwise.

Examples 1 and 2: Fresh HDPE material in the form of granules (Hostalen® GF 7650 P1) is homogenized in a mixer with the stabilizers listed in Table 1 and subsequently extruded five times one after the other in a single-screw extruder (temperature 250°C). The melt flow rate (190°C, 10 kg) is determined in accordance with DIN 53735M (ISO 1133/12) after the 1st, 3rd and 5th extrusions.

The stabilized granules from the first extrusion are converted into test specimens at 250°C in an injection-moulding machine. These test specimens are subjected to artificial ageing at 120°C, the brittleness of the sample being determined as a function of the ageing duration. Table 1 shows the ageing time in days before the sample breaks.

**Table 1:**

| Multiple extrusion (temperature 250°C) of HDPE | | | | | |
|---|---|---|---|---|---|
| | Stabilization | Melt flow rate after | | | Fracture after [days] |
| | | 1st | 3rd | 5th | |
| | | extrusions | [190°C/10 kg] | | |
| A | no additives | 6.69 | 7.18 | 7.72 | 5 |
| B | 0.07 AO-1 + 0.13 % P1 | 7.12 | 7.58 | 8.08 | 131 |
| C | 0.04 % AO-1 + 0.08 % P-1 + 0.08 % Ca stearate | 7.06 | 7.11 | 7.65 | 107 |
| **Ex. 1** | **0.04 % AO-1 + 0.08 % P-1 + 0.08 % CaO** | **6.74** | **6.80** | **6.84** | **>150** |
| **Ex. 2** | **0.05 % AO-1 + 0.05 % P-1 + 0.10 % CaO** | **6.84** | **6.86** | **7.04** | ***** |

| | | | | | |
|---|---|---|---|---|---|
| * not determined | | | | | |

The novel stabilized samples exhibit only a slight increase in melt flow index after repeated extrusion. Degradation reactions and decomposition of the polymer cause the melt flow index to increase. In addition, the artificial ageing values show the advantageous improvement in the long-term stability with the novel stabilizer mixture.

In the above examples, the following stabilizers are used:
- AO-1: Pentaerythrityl ester of β-(3,5-di-tert-butyl-4-hydroxyphenyl)propionic acid
- P-1: Tris-(2,4-di-tert-butylphenyl) phosphite

## Claims

1. Stabilized high-density polyethylene (HDPE), which is obtained by means of Ziegler-Natta catalysts and which experiences a reduction in molecular weight during processing, comprising a mixture, preferably from 0.05 to 15 % by weight, of a) at least one sterically hindered phenol, b) at least one organic phosphite or phosphonite and c) calcium oxide, with the proviso that no thiosynergist is present and that the high-density polyethylene is no recyclate.

2. HDPE according to claim 1, wherein the a:b weight ratio is from 20:1 to 1:20 and the (a+b):c weight ratio is from 10:1 to 1:20.

3. HDPE according to claim 1, wherein the a:b weight ratio is from 10:1 to 1:10 and the (a+b):c weight ratio is from 5:1 to 1:10.

4. HDPE according to claim 1, comprising from 0.05 to 5 % by weight of the mixture of a, b and c.

5. HDPE according to claim 1, wherein component a is a compound containing at least one group of the formula 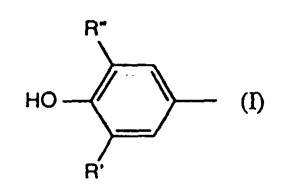 in which R' is hydrogen, methyl or tert-butyl; and R" is substituted or unsubstituted alkyl or substituted or unsubstituted alkylthioalkyl.

6. HDPE according to claim 1, wherein component a is a compound selected from 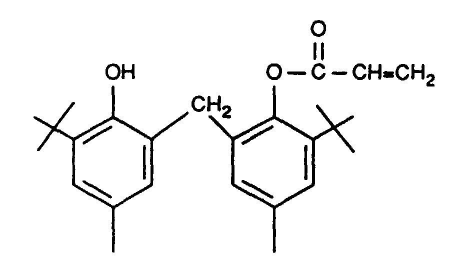 {2-(1,1 -dimethylethyl)-6-[[3-(1,1-dimethylethyl)-2-hydroxy-5-methylphenyl]methyl]-4-methylphenyl 2-propenoate}; 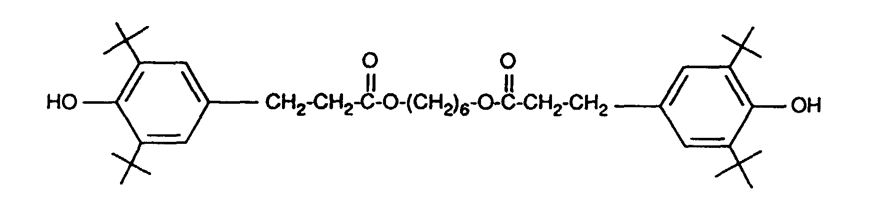 {1,6-hexanediyl 3,5-bis(1,1-dimethylethyl)-4-hydroxyphenylpropanoate}; 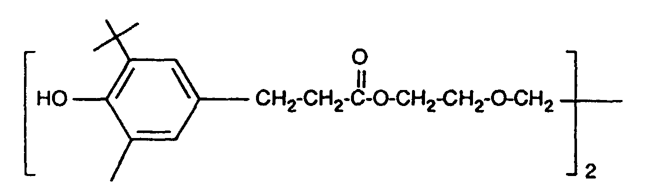 {1,2-ethanediylbis(oxy-2,1-ethanediyl) 3-(1,1-dimethylethyl)-4-hydroxy-5-methyl-phenylpropanoate}; 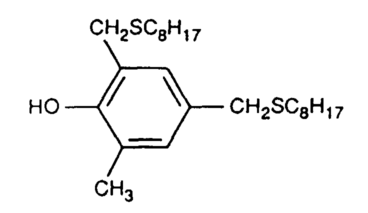 {2-methyl-4,6-di[(octylthio)methyl]phenol}; 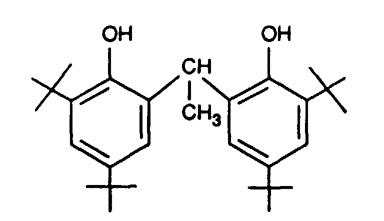 {2,2'-ethylidenebis(4,6-di-tert-butylphenol)}; 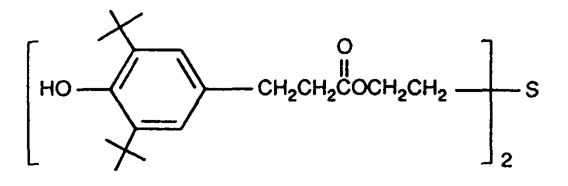 {thiodi-2,1-ethanediyl bis-3,5-di(1,1-dimethylethyl)-4-hydroxyphenylpropanoate}; 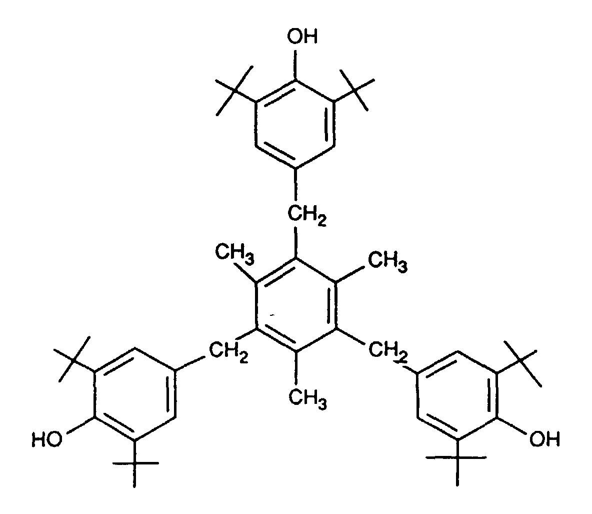 {4,4',4"-[(2,4,6-trimethyl-1,3,5-phenyltriyl)tris(methylene)]tris[2,6-bis(1,1-dimethylethyl)-phenol},
and
the pentaerythrityl, octyl and octadecyl esters of β-(3,5-di-tert-butyl-4-hydroxyphenyl)propionic acid.

7. HDPE according to claim 1, wherein component a is the pentaerythrityl, octyl or octadecyl ester of β-(3,5-di-tert-butyl-4-hydroxyphenyl)propionic acid.

8. HDPE according to claim 1, wherein component b is a phosphonite or phosphite of the formula 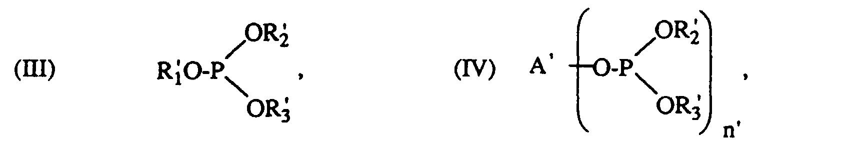 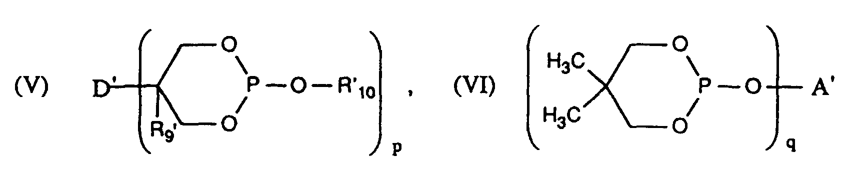 or 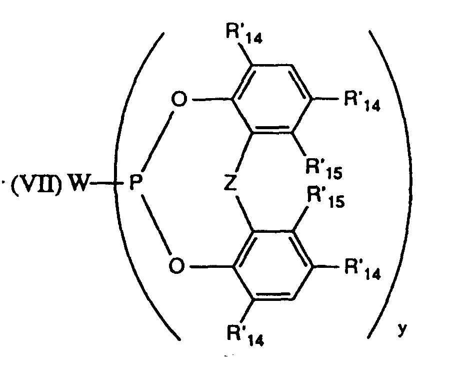 in which
R'₁, R'₂ and R'₃, independently of one another, are alkyl having 1 to 18 carbon atoms, alkyl having 1 to 18 carbon atoms which is substituted by halogen, -COOR₄', -CN or -CONR₄'R₄', alkyl having 2 to 18 carbon atoms which is interrupted by -S-, -O- or -NR'₄-, cycloalkyl having 5 to 8 carbon atoms, phenyl or naphthyl, phenyl or naphthyl which is substituted by halogen, 1 to 3 alkyl radicals or alkoxy radicals having a total of 1 to 18 carbon atoms, 2,2,6,6-tetramethylpiperid-4-yl, N-allyl- or N-benzyl- or N-alkyl-2,2,6,6-tetramethylpiperid-4-yl having 1 to 4 carbon atoms in the alkyl moiety or N-alkanoyl-2,2,6,6-tetramethylpiperid-4-yl having 1 to 4 carbon atoms in the alkyl moiety, or N-alkylene-2,2,6,6-tetramethylpiperidyl or N-alkylene-4-alkoxy-2,2,6,6-tetramethylpiperidyl having 1 to 3 carbon atoms in the alkylene moiety and 1 to 18 carbon atoms in the alkoxy moiety,
R'₄ or the radicals R₄' are, independently of one another, hydrogen, alkyl having 1 to 18 carbon atoms, cycloalkyl having 5 to 12 carbon atoms or phenylalkyl having 1 to 4 carbon atoms in the alkyl moiety,
n' is 2, 3 or 4,
A', if n' or q is 2, is alkylene having 2 to 12 carbon atoms, alkylene having 2 to 12 carbon atoms which is interrupted by -S-, -O- or -NR'₄-, in which R'₄ is as defined above, or a radical of the formula 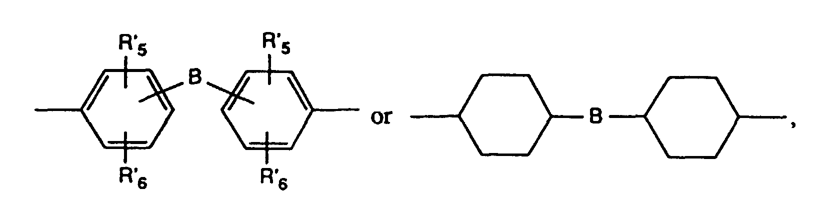
A', if n' or q is 3, is a radical of the formula -CᵣH₂ᵣ₋₁- or N(CH₂CH₂ 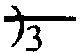 ,in which r is 5 or 6,
A', if n' is 4, is a radical of the formula C(CH 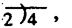
R'₅ and R'₆, independently of one another, are hydrogen or alkyl having 1 to 8 carbon atoms,
B is a radical of the formula -CH₂-, -CHR'₄-, -CR'₁R'₄-, -S- or a direct bond, in which R'₁ and R'₄ are as defined above,
p is 1 or 2,
D' is methyl if p is 1 and -CH₂OCH₂- ifp is 2,
R'₉ is methyl, and R'₁₀ is as defined for R'₁,
q is 2 or 3,
y is 1, 2 or 3,
W, if y is 1, is alkyl having 1 to 18 carbon atoms, a radical of the formula -OR'₁₆, -NR'₁₇R'₁₈ or fluorine,
W, if y is 2, is a radical of the formula -O-A"-O- or 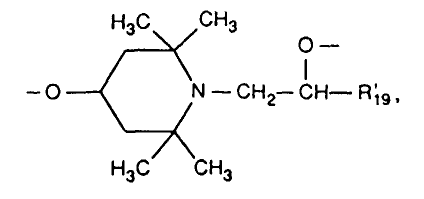
W, if y is 3, is a radical of the formula R^{'}₄C(CH₂O 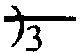 , N(C₂H₄O 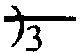 or N(C₃H₆O 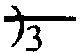 , in which R'₄ is as defined above,
R'₁₆ is as defined for R'₁,
R'₁₇ and R'₁₈, independently of one another, are alkyl having 1 to 18 carbon atoms, benzyl, cyclohexyl, a 2,2,6,6-tetra- or 1,2,2,6,6-pcntamethylpiperid-4-yl radical, or R'₁₇ and R'₁₈ together form butylene, pentylene, hexylene or the radical of the formula -CH₂CH₂-O-CH₂CH₂-,
A" is as defined for A', if n' is 2,
R'₁₉ is hydrogen or methyl,
the substituents R'₁₄, independently of one another, are hydrogen, alkyl having 1 to 9 carbon atoms or cyclohexyl,
R'₁₅ is hydrogen or methyl and
Z is a direct bond, -CH₂-, -C(R'₁₄)₂- or -S-, in which the substituents R'₁₄ are identical or different and are as defined above.

9. HDPE according to claim 1, wherein component b is an aromatic phosphite or phosphonite.

10. HDPE according to claim 1, wherein component b is tris(2,4-di-tert-butylphenyl) phosphite or

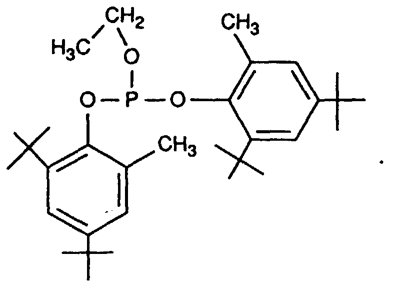

11. HDPE according to claim 1, wherein, in addition, at least one light stabilizer from the series consisting of the benzophenones, benzotriazoles, oxanilides and sterically hindered amines is added to the HDPE.

12. HDPE according to claim 1, wherein, in addition, at least one light stabilizer from the series consisting of the benzophenones, benzotriazoles, oxanilides and sterically hindered amines is added to the HDPE, where the amount of the light stabilizer(s) is from 0.01 to 2 % by weight, based on HDPE.

13. Use of a stabilizer mixture comprising a) at least one sterically hindered phenol, b) at least one organic phosphite or phosphonite and c) calcium oxide for the stabilization of high-density polyethylene (HDPE) which is obtained by means of Ziegler-Natta catalysts and which experiences a reduction in molecular weight during processing, with the proviso that no thiosynergist is present and the HDPE is no recylate.

14. A process for the stabilization of high-density polyethylene (HDPE) which comprises adding a stabilizer mixture according to claim 13.

## Patentansprüche

1. Stabilisiertes Polyethylen hoher Dichte (HDPE, das mittels Ziegler-Natta-Katalysatoren erhalten wird und das bei der Verarbeitung einen Molekulargewichtsabbau erfährt, umfassend ein Gemisch, vorzugsweise von 0,05 bis 15 Gew-%, aus a) mindestens einem sterisch gehinderten Phenol, b) mindestens einem organischen Phosphit oder Phosphonit und c) Calciumoxid, mit der Maßgabe, daß kein Thiosynergist vorhanden ist und daß das Polyethylen mit hoher Dichte kein Recyclat ist.

2. HDPE nach Anspruch 1, worin das Gewichtsverhältnis a:b gleich 20:1 bis 1:20 und das Gewichtsverhältnis (a+b):c gleich 10:1 bis 1:10 beträgt.

3. HDPE nach Anspruch 1, worin das Gewichtsverhältnis a:b gleich 10:1 bis 1:10 und das Gewichtsverhältnis (a+b):c gleich 5:1 bis 1:10 beträgt.

4. HDPE nach Anspruch 1, umfasend 0,05 bis 5 Gew-% des Gemisches von a, b und c.

5. HDPE nach Anspruch 1, worin die Komponente a eine Verbindung ist, die wenigstens eine Gruppe der Formel 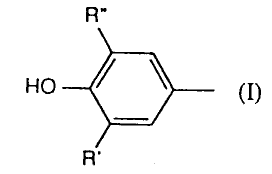 enthalten, worin R' Wasserstoff, Methyl oder tert.Butyl; und R" gegebenenfalls substituiertes Alkyl oder gegebenenfalls substituiertes Alkylthioalkyl bedeutet.

6. HDPE nach Anspruch 1, worin die Komponente a eine Verbindung ist, ausgewählt unter 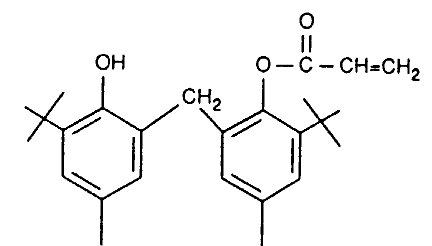 {2-Propensäure-2-(1,1-dimethylethyl)-6-[[3-(1,1-dimethylethyl)-2-hydroxy-5-methylphenyl]methyl]-4-methylphenylester}; 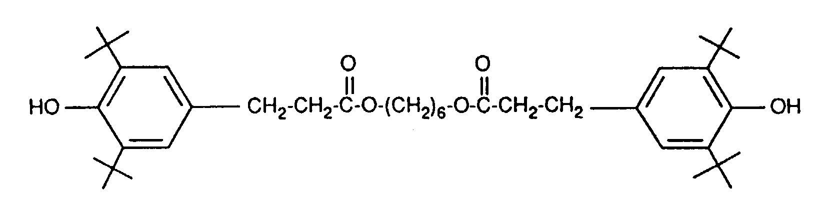 {3,5-Bis(1,1-dimethylethyl)-4-hydroxy-phenylpropansäure-1,6-hexandiylester}; 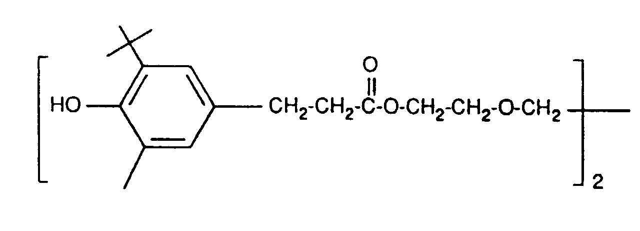 {3-(1,1-Dimethylethyl)-4-hydroxy-5-methyl-phenylpropansäure-1,2-ethandiylbis(oxy-2,1-ethandiyl)ester}; 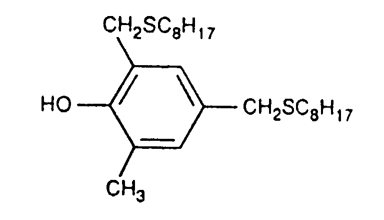 {2-Methyl-4,6-bis[(octylthio)methyl]-phenol}; 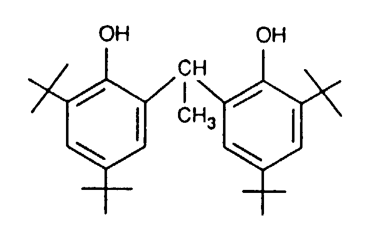 {2,2'-Ethyliden-bis-(4,6-di-tert.butylphenol)}; 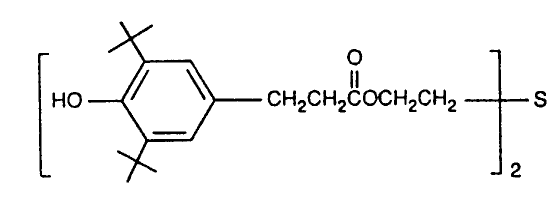 {3,5-Bis(1,1-dimethylethyl)-4-hydroxy-phenylpropansäure-thio-di-2,1-ethandiylester}; 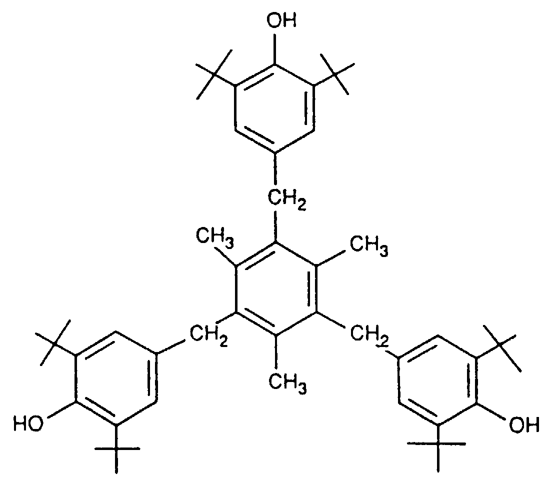 {4,4',4"-[(2,4,6-Trimethyl-1,3,5-phenyltriyl)tris(methylen)]tris[2,6-bis(1,1-dimethylethyl)phenol};
und den Pentaerythrit-, dem Octyl- und dem Octadecylester der β-(3,5-Di-tert.butyl-4-hydroxyphenyl)-propionsäure.

7. HDPE nach Anspruch 1, worin die Komponente a der Pentaerythrit-, der Octyl- oder der Octadecylester der β-(3,5-Di-tert.butyl-4-hydroxyphenyl)-propionsäure ist.

8. HDPE nach Anspruch 1, worin die Komponente b ein Phosphonit oder Phosphit der Formel 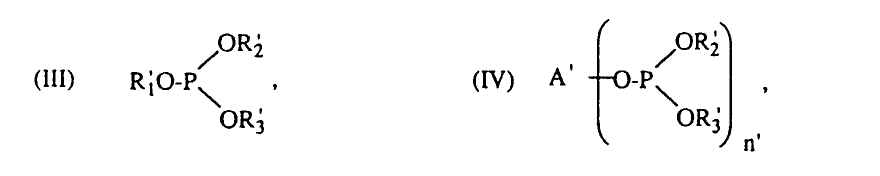 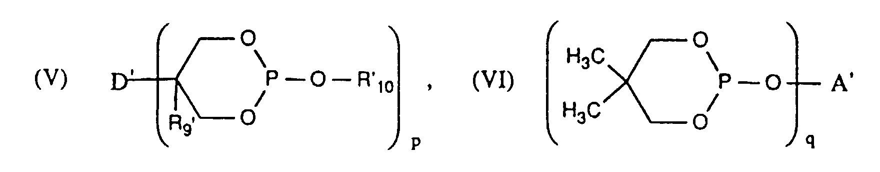 oder 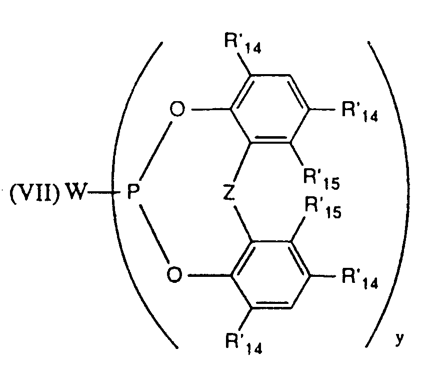 ist, worin
R'₁, R'₂ und R'₃ unabhängig voneinander Alkyl mit 1 bis 18 Kohlenstoffatomen, mit Halogen, -COOR₄', -CN oder -CONR₄'R₄' substituiertes Alkyl mit 1 bis 18 Kohlenstoffatomen, durch -S-, -O- oder -NR₄'- unterbrochenes Alkyl mit 2 bis 18 Kohlenstoffatomen, Cycloalkyl mit 5 bis 8 Kohlenstoffatomen, Phenyl oder Naphthyl, mit Halogen, 1 bis 3 Alkylresten oder Alkoxyresten mit insgesamt 1 bis 18 Kohlenstoffatomen substituiertes Phenyl oder Naphthyl, 2,2,6,6-Tetramethylpiperid-4-yl, N-Allyl- oder N-Benzyl- oder N-Alkyl-2,2,6,6-tetramethylpiperid-4-yl mit 1 bis 4 Kohlenstoffatomen im Alkylteil oder N-Alkanoyl-2,2,6,6-tetramethylpiperid-4-yl mit 1 bis 4 Kohlenstoffatomen im Alkylteil oder N-Alkylen-2,2,6,6-tetramethylpiperidyl oder N-Alkylen-4-alkoxy-2,2,6,6-tetramethylpiperidyl mit 1 bis 3 Kohlenstoffatomen im Alkylenteil und 1 bis 18 Kohlenstoffatomen im Alkoxyteil sind,
R'₄ beziehungsweise die Reste R₄' sind unabhängig voneinander Wasserstoff, Alkyl mit 1 bis 18 Kohlenstoffatomen, Cycloalkyl mit 5 bis 12 Kohlenstoffatomen oder Phenylalkyl mit 1 bis 4 Kohlenstoffatomen im Alkylteil,
n' ist 2, 3 oder 4,
A' ist, wenn n' oder q die Bedeutung 2 hat, Alkylen mit 2 bis 12 Kohlenstoffatomen, durch -S-, -O- oder -NR'₄- unterbrochenens Alkylen mit 2 bis 12 Kohlenstoffatomen, worin R'₄ die angegebene Bedeutung hat, oder ist ein Rest der Formel 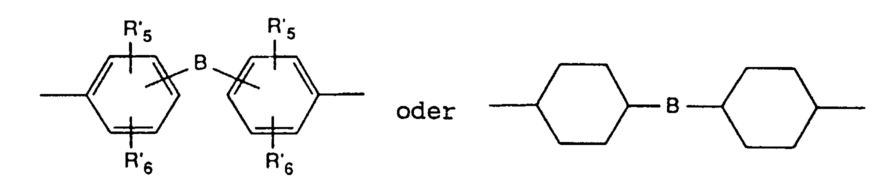
A' ist, wenn n' oder q die Bedeutung 3 hat, ein Rest der Formel -CᵣH₂ᵣ₋₁- oder N(-CH₂CH₂ 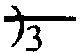 ,worin r 5 oder 6 ist,
A' ist, wenn n' die Bedeutung 4 hat, der Rest der Formel C(CH 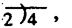
R'₅ und R'₆ sind unabhängig voneinander Wasserstoff oder Alkyl mit 1 bis 8 Kohlenstoffatomen,
B ist ein Rest der Formel -CH₂-, -CHR'₄-, -CR'₁R'₄, -S- oder eine direkte Bindung, worin R'₁ und R'₄ die angegebenen Bedeutungen haben,
p ist 1 oder 2,
D' ist, wenn p die Bedeutung 1 hat, Methyl, und wenn p die Bedeutung 2 hat, -CH₂OCH₂-,
R'₉ ist Methyl, und R'₁₀ hat die Bedeutung von R'₁,
q ist 2 oder 3,
y ist 1, 2 oder 3,
W ist, wenn y die Bedeutung 1 hat, Alkyl mit 1 bis 18 Kohlenstoffatomen, ein Rest der Formel -OR'₁₆, -NR'₁₇R'₁₈ oder Fluor,
W ist, wenn y die Bedeutung 2 hat, ein Rest der Formel -O-A"-O- oder 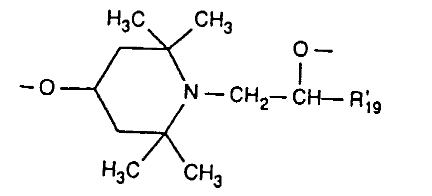
W ist, wenn y die Bedeutung 3 hat, ein Rest der Formel R'C(CH₂O)₃, N(C₂H₄O)₃ oder N(C₃H₆O)₃, worin R'₄ die angegebene Bedeutung hat,
R'₁₆ hat die Bedeutung von R'₁,
R'₁₇ und R'₁₈ sind unabhängig voneinander Alkyl mit 1 bis 18 Kohlenstoffatomen, Benzyl, Cyclohexyl, ein 2,2,6,6-Tetra- oder 1,2,2,6,6-Pentamethylpiperid-4-ylrest, oder R'₁₇ und R'₁₈ sind zusammen Butylen, Pentylen, Hexylen oder bilden den Rest der Formel -CH₂-CH₂-O-CH₂-CH₂-,
A" hat die Bedeutung von A', wenn n' die Bedeutung 2 hat, R'₁₉ ist Wasserstoff oder Methyl,
die Substituenten R'₁₄ sind unabhängig voneinander Wasserstoff, Alkyl mit 1 bis 9 Kohlenstoffatomen oder Cyclohexyl,
R'₁₅ ist Wasserstoff oder Methyl,
Z ist eine Direktbindung, -CH₂-, -C(R'₁₄)₂ oder -S-, worin die Substituenten R'₁₄ gleich oder verschieden sind und die angegebene Bedeutung haben.

9. HDPE nach Anspruch 1, worin die Komponente b ein aromatisches Phosphit oder Phosphonit ist.

10. HDPE nach Anspruch 1, worin die Komponente b Tris(2,4-di-tert-buytlphenyl)phosphit oder 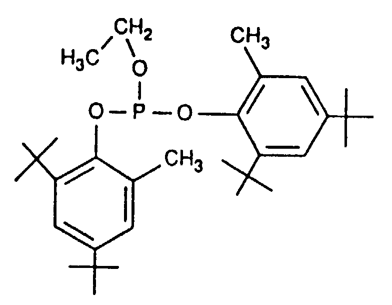 ist.

11. HDPE nach Anspruch 1, worin dem HDPE zusätzlich wenigstens ein Lichtschutzmittel aus der Reihe der Benzphenone, Benzotriazole, Oxanilide oder sterisch gehinderten Amine zugesetzt ist.

12. HDPE nach Anspruch 1, worin dem HDPE zusätzlich wenigstens ein Lichtschutzmittel aus der Reihe der Benzophenone, Benzotriazole, Oxanilide oder sterisch gehinderten Amine zugesetzt ist, wobei die Menge des oder der Lichtschutzmittel 0,01 bis 2 Gew-%, bezogen auf HDPE, beträgt.

13. Verwendung eines Stabilisatorgemisches, das a) wenigstens ein sterisch gehindertes Phenol, b) wenigstens ein organisches Phosphit oder Phosphonit und c) Calciumoxid enthält, zur Stabilisierung von Polyethylen mit hoher Dichte (HDPE), das mittels Ziegler-Natta-Katalysatoren erhalten wurde und mit der Maßgabe, daß kein Thiosynergist vorhanden ist und daß das HDPE kein Recyclat ist, und das bei der Verarbeitung einen Molekulargewichtsabbau erfährt.

14. Verfahren zur Stabilisierung von Polyethylen mit hoher Dichte (HDPE), gekennzeichnet durch die Zugabe eines Stabilisatorgemisches nach Anspruch 13.

## Revendications

1. Polyéthylène haute densité stabilisé (HDPE) qui est obtenu au moyen de catalyseurs Ziegler-Natta et qui subit une diminution de la masse moléculaire pendant le traitement, comprenant un mélange, de préférence de 0,05 à 15% en poids de a) au moins un phénol à encombrement stérique, b) au moins un phosphite ou phosphonite organique et c) un oxyde de calcium, avec la condition qu'aucun thiosynergiste ne soit présent et que le polyéthylène haute densité ne soit pas un produit recyclé.

2. HDPE selon la revendication 1, dans lequel le rapport pondéral a:b vaut de 20:1 à 1:20 et le rapport pondéral (a+b):c vaut de 10:1 à 1:20.

3. HDPE selon la revendication 1, dans lequel le rapport pondéral a:b vaut de 10:1 à 1:10 et le rapport pondéral (a+b):c vaut de 5:1 à 1:10.

4. HDPE selon la revendication 1, comprenant de 0,05 à 5% en poids du mélange de a, b et c.

5. HDPE selon la revendication 1, dans lequel le composant a est un composé contenant au moins un groupe de formule 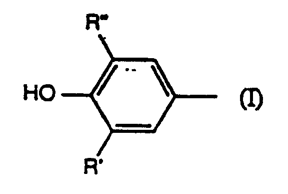 dans laquelle R' représente un atome d'hydrogène, un groupe méthyle ou tert-butyle; et R" représente un groupe alkyle substitué ou non substitué ou alkylthioalkyle substitué ou non substitué.

6. HDPE selon la revendication 1, dans lequel le composant a est un composé choisi parmi 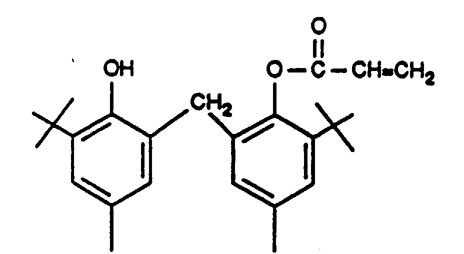 {le 2-propénoate de 2-(1,1-diméthyléthyl)-6-[[3-(1,1-diméthyléthyl)-2-hydroxy-5-méthylphényl]méthyl]-4-méthylphényle}; 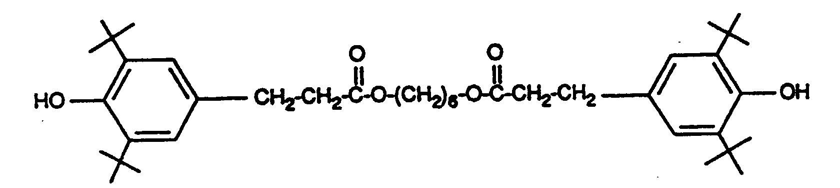 {le 3,5-bis(1,1-diméthyléthyl)-4-hydroxyphénylpropaneoate de 1,6-hexanediyle}; 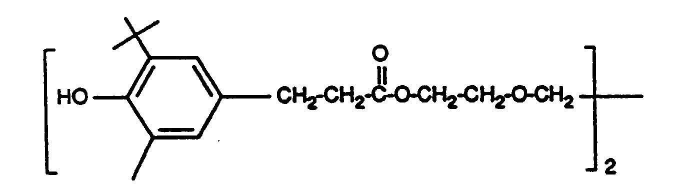 {le 3-(1,1-diméthyléthyl)-4-hydroxy-5-méthylphénylpropanoate de 1,2-éthanediylbis(oxy-2,1-éthanediyle)}; 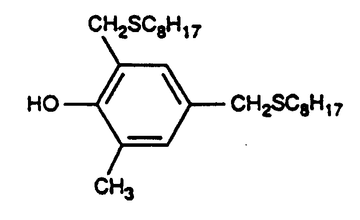 {le 2-méthyl-4,6-bis[(octylthio)méthyl]phénol}; 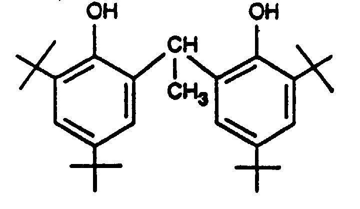 {le 2,2'-éthylidènebis (4,6-di-tert-butylphénol)}; 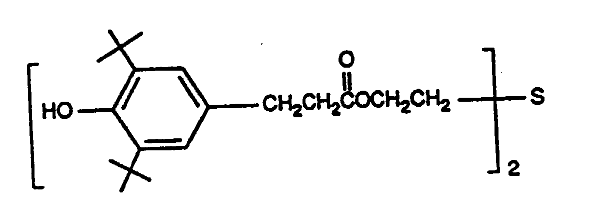 {le bis-3,5-di(1,1-diméthyléthyl)-4-hydroxyphénylpropanoate de thiodi-2,1-éthanediyl}; 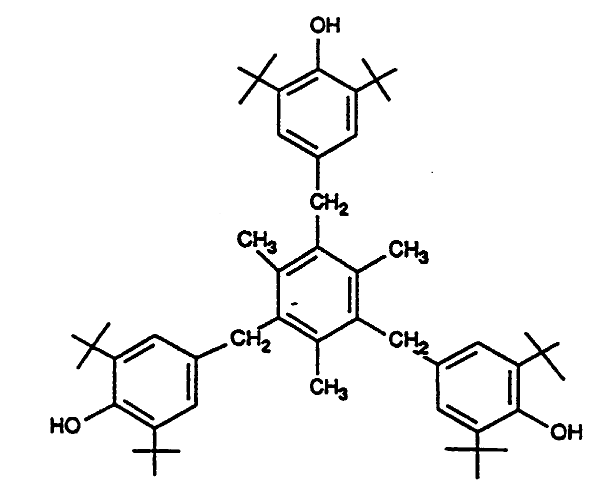 {le 4,4',4"-[(2,4,6-triméthyl-1,3,5-phényltriyl)tris(méthylène)]tris[2,6-bis(1,1-diméthyléthyl)phénol], et les esters pentaérythrityliques, octyliques et octadécyliques de l'acide β-(3,5-di-tert-butyl-4-hydroxyphényl)propionique.

7. HDPE selon la revendication 1, dans lequel le composant a est l'ester pentaérythritylique, octylique ou octadécylique de l'acide β-(3,5-di-tert-butyl-4-hydroxyphényl)propionique.

8. HDPE selon la revendication 1, dans lequel le composant b est un phosphonite ou phosphite de formule 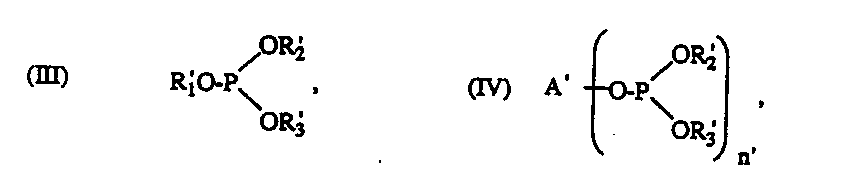 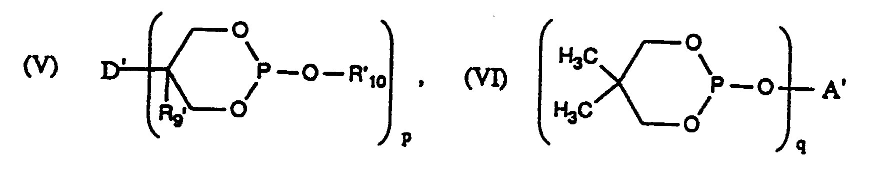 ou 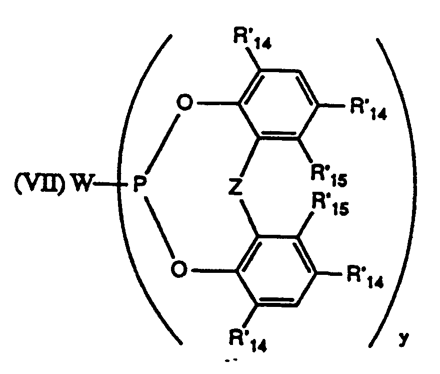 dans lesquelles
R'₁, R'₂ et R'₃ représentent, indépendamment l'un de l'autre, des groupes alkyle ayant 1 à 18 atomes de carbone, alkyle ayant 1 à 18 atomes de carbone qui est substitué par un atome d'halogène, -COOR₄', -CN ou -CONR₄'R₄', alkyle ayant 2 à 18 atomes de carbone qui est interrompu par -S-, -O- ou -NR'₄-, cycloalkyle ayant 5 à 8 atomes de carbone, phényle ou naphtyle, phényle ou naphtyle qui est substitué par un atome d'halogène, 1 à 3 radicaux alkyle ou radicaux alcoxy ayant un total de 1 à 18 atomes de carbone, 2,2,6,6-tétraméthylpipérid-4-yle, N-allyle ou N-benzyle- ou N-alkyl-2,2,6,6-tétraméthylpipérid-4-yle ayant 1 à 4 atomes de carbone dans la fraction alkyle, ou N-alcanoyl-2,2,6,6-tétraméthylpipérid-4-yle ayant 1 à 4 atomes de carbone dans la fraction alkyle, ou N-alkylène-2,2,6,6-tétraméthylpipérid-4-yle ou N-alkylène-4-alcoxy-2,2,6,6-tétraméthylpipéridyle ayant 1 à 3 atomes de carbone dans la fraction alkylène et 1 à 18 atomes de carbone dans la fraction alcoxy.
R'₄ ou bien les radicaux R₄' représentent, indépendamment l'un de l'autre, un atome d'hydrogène, un groupe alkyle ayant 1 à 18 atomes de carbone, cycloalkyle ayant 5 à 12 atomes de carbone ou phénylalkyle ayant 1 à 4 atomes de carbone dans la fraction alkyle,
n' vaut 2, 3 ou 4,
A', si n' ou q vaut 2, représente un groupe alkylène ayant 2 à 12 atomes de carbone, alkylène ayant 2 à 12 atomes de carbone qui est interrompu par -S-, -O- ou -NR'₄, dans lequel N'₄ est tel que défini ci-dessus, ou un radical de formule 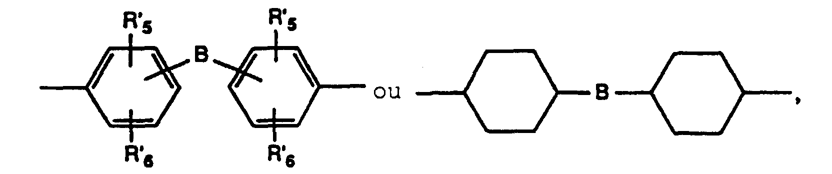
A', si n' ou q vaut 3, représente un radical de formule -C₁H₂ᵣ₋₁- ou N(CH₂CH₂-)₃-, dans laquelle
r vaut 5 ou 6,
A', si n' vaut 4, est le radical de formule C(CH₂-)₃-,
R'₅ et R'₆, représentent, indépendamment l'un de l'autre, un atome d'hydrogène ou un groupe alkyle ayant 1 à 8 atomes de carbone,
B est un radical de formule -CH₂-, -CHR'₄-, -CR'₁R'₄-, -S- ou une liaison directe, dans lesquelles R'₁ et R'₄ sont tels que définis ci-dessus,
p vaut 1 ou 2,
D' représente un groupe méthyle si p vaut 1 et -CH₂OCH₂- si p vaut 2,
R'₉ représente un groupe méthyle, et R'₁₀ est tel que défini pour R'₁,
q vaut 2 ou 3,
y vaut 1, 2 ou 3,
W, si y vaut 1, est un groupe alkyle ayant 1 à 18 atomes de carbone, un radical de formule -OR'₁₆, -NR'₁₇R'₁₈ ou un atome de fluor,
W, si y vaut 2, est un radical de formule -O-A"-O- ou 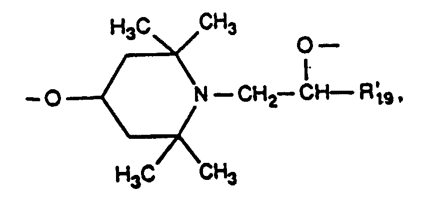
W, si y vaut 3, est un radical de formule R'₄C(CH₂O-)₃-, N(C₂H₄O-)₃-ou N(C₃H₆O-)₃-,
dans laquelle R'₄ est tel que défini ci-dessus,
R'₁₆ est tel que défini pour R'₁,
R'₁₇ et R'₁₈ représentent, indépendamment l'un de l'autre, un groupe alkyle de 1 à 18 atomes de carbone, benzyle, cyclohexyle, un radical 2,2,6,6-tétra- ou 1,2,2,6,6-pentaméthylpipérid-4-yle, ou R'₁₇ et R'₁₈ forment ensemble un groupe butylène, pentylène, hexylène ou le radical de formule -CH₂CH₂-O-CH₂CH₂-,
A" est tel que défini pour A' si n' vaut 2,
R'₁₉ représente un atome d'hydrogène ou un groupe méthyle, les substituants R'₁₄ représentent, indépendamment l'un de l'autre, un atome d'hydrogène, un groupe alkyle ayant 1 à 9 atomes de carbone ou cyclohexyle,
R'₁₅ représente un atome d'hydrogène ou un groupe méthyle, et
Z est une liaison directe, -CH₂-, -C(R'₁₄)₂- ou -S-, dans laquelle les substituants R'₁₄ sont identiques ou différents et sont tels que définis ci-dessus.

9. HDPE selon la revendication 1, dans lequel le composant b est un phosphite ou un phosphonite aromatique.

10. HDPE selon la revendication 1, dans lequel le composant b est le phosphite de tris(2,4-di-tert-butylphényle) ou

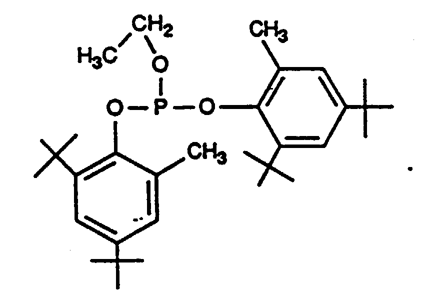

11. HDPE selon la revendication 1, dans lequel, en complément, au moins un photostabilisant provenant de la série formée par les benzophénones, les benzotriazoles, les oxanilides et les amines à encombrement stérique est ajouté au HDPE.

12. HDPE selon la revendication 1, dans lequel, en complément, au moins un photostabilisant provenant de la série formée par les benzophénones, les benzotriazoles, les oxanilides et les amines à encombrement stérique est ajouté au HDPE, où la quantité du ou des photostabilisants est de 0,01 à 2% en poids, par rapport au HDPE.

13. Utilisation d'un mélange de stabilisants comprenant a) au moins un phénol à encombrement stérique, b) au moins un phosphite ou phosphonite organique et c) un oxyde de calcium, pour la stabilisation du polyéthylène haute densité (HDPE) qui est obtenu au moyen de catalyseurs Ziegler-Natta et avec la condition qu'aucun thiosynergiste ne soit présent et que le HDPE haute densité ne soit pas un produit recyclé, qui subit une diminution de la masse moléculaire au cours du traitement.

14. Procédé pour la stabilisation de polyéthylène haute densité (HDPE) qui consiste à ajouter un mélange de stabilisants selon la revendication 13.
